# EUROPÄISCHE PATENTSCHRIFT

(11) **EP 2 224 295 B1**
(45) Veröffentlichungstag und Bekanntmachung des Hinweises auf die Patenterteilung: **04.12.2013**
(21) Anmeldenummer: 10154053.2
(22) Anmeldetag: 19.02.2010
(51) Int. Cl.: G05B 9/02, G05B 19/042, G05B 19/418

(54) **Verfahren zum Freischalten eines Anlagengeräts einer Industrieanlage**
Method for releasing a device of an industrial plant
Procédé de déconnexion d'un appareil d'une installation industrielle

(30) Priorität: 25.02.2009 DE 102009010534
(43) Veröffentlichungstag der Anmeldung: 01.09.2010
(73) Patentinhaber: Siemens Aktiengesellschaft, 80333 München (DE)
(72) Erfinder: Ebner, Günther, 91466 Gerhardshofen (DE)

(56) Entgegenhaltungen:
- EP-A1- 2 019 347
- EP-A2- 1 657 610
- WO-A1-02/31717

## Beschreibung

Die Erfindung betrifft ein Verfahren zum Freischalten eines Anlagengeräts einer Industrieanlage, bei dem zumindest eine Sicherheitsmaßnahme am Anlagengerät getroffen wird, sodass ein sicheres Arbeiten am Anlagengerät möglich ist, und das Anlagengerät zur Durchführung der Arbeiten freigeschaltet und nach dem Freischalten an dem Anlagengerät außerbetrieblich gearbeitet wird.

In einer automatisierten Industrieanlage, wie einer Produktionsanlage, einer petrochemischen Anlage, einem Kraftwerk oder einer Transportanlage, wird ein industrieller Prozess mit Hilfe einer Vielzahl von Anlagengeräten durchgeführt. Soll eines dieser Anlagengeräte repariert oder gewartet werden, so ist sicher zu stellen, dass das Anlagengerät nicht während der Arbeiten automatisch und unerwünscht in Betrieb genommen, mit Medien beaufschlagt oder mit einem Stromversorgungsnetz verbunden wird. Um die Arbeitssicherheit zu gewährleisten, gibt es Maßnahmenkataloge, in denen Sicherheitsmaßnahmen aufgelistet sind, die vor Beginn der eigentlichen Arbeiten am Anlagengerät durchzuführen sind. Diese Sicherheitsmaßnahmen werden üblicherweise von einem Beschäftigten der Industrieanlage ausgeführt und das Anlagengerät wird anschließend zur Durchführung der Arbeiten freigeschaltet.

Diese Freischaltung kann erfolgen, indem der Maßnahmenkatalog auf einem Formular Maßnahme für Maßnahme abgehakt wird, ein Mitarbeiter der Industrieanlage das Formular unterschreibt und ein Durchschlag des Formulars dem Wartungstechniker als Bestätigung der Freischaltung übergeben wird. Nach Abschluss der Arbeiten am Anlagengerät wird die Freischaltung zurückgenommen, indem die Freischaltungsbestätigung vom Wartungsingenieur wieder an den Mitarbeiter der Industrieanlage übergeben wird und dieser anschließend die Sicherheitsmaßnahmen rückgängig macht. Erst danach wird das Anlagengerät wieder in Betrieb genommen.

Aus der WO 02/31717 A1 ist ein Verfahren zur Wartung von Anlagengeräten einer Industrieanlage bekannt, bei dem die für die Wartung durchzuführenden Arbeiten automatisch von einer Wartungszentrale an den Wartungsmitarbeiter gesandt werden. Darüber hinaus ist in der EP 1 657 610 A2 beschrieben, dass dem Wartungsmitarbeiter zusätzliche Informationen, wie Schaltpläne, Sicherheitshinweise, animierte Bilder und dergleichen zur Unterstützung seiner Arbeiten automatisiert übersandt werden.

Es ist eine Aufgabe der vorliegenden Erfindung, ein Verfahren zum Freischalten eines Anlagengeräts einer Industrieanlage anzugeben, mit dem eine hohe Sicherheit beim Arbeiten an dem Anlagengerät erzielt werden kann.

Diese Aufgabe wird durch ein Verfahren der eingangs genannten Art gelöst, bei dem erfindungsgemäß mit Hilfe einer Datenübermittlungseinheit mit einem Dateneingang zur Aufnahme von Daten des Anlagengeräts und einer Schnittstelle zwischen der Datenübermittelungseinheit und einer Leittechnik der Industrieanlage Freischaltungsinformation an die Leittechnik übermittelt wird, wobei die Freischaltungsinformation Daten zur am freigeschalteten Anlagengerät auszuführenden Arbeit umfasst.

Diese Daten können Daten zur Art der Arbeit, der voraussichtlichen Dauer und/oder Konsequenzen der Arbeit sein. Ebenfalls möglich ist es, dass die Daten Informationen enthalten, die es der Leittechnik erlauben, auf hinterlegte Informationen zur Arbeit zurückzugreifen, beispielsweise zu einem Arbeitspaket, das mehrere Arbeiten an mehreren Anlagengeräten umfasst. Auf diese Weise kann eine Freischaltung in einen größeren Kontext einsortiert werden, sodass ein guter Überblick über die in der Industrieanlage durchgeführten Arbeiten entsteht.

Die Leittechnik sperrt eine durch die Leittechnik veranlasste aktivierende Ansteuerung des freigeschalteten Anlagengeräts. Hierdurch kann zuverlässig vermieden werden, dass das Anlagengerät durch automatisierte Vorgänge ungewollterweise wieder in Betrieb genommen wird. Das Anlagengerät kann zuverlässig abgeschaltet und Sicherheit beim Arbeiten kann erhöht werden.

Die aktivierende Ansteuerung ist auch dann gesperrt, wenn das freigeschaltete Anlagengerät mit Arbeitsenergie versorgt und eingeschaltet ist. So kann beispielsweise zum Testen von ausgeführten Arbeiten das Anlagengerät von einem Wartungsmonteur wieder in Betrieb genommen werden, beispielsweise eine Pumpe angeschaltet werden, ohne dass weitere zum Anlagengerät zugehörige Vorgänge, beispielsweise das Versorgen der Pumpe mit Flüssigkeit, durchgeführt werden sollen. Auf diese Weise kann vermieden werden, dass ein in der Leittechnik als eigentlich betriebsbereit gekennzeichnetes Anlagengerät wieder vollständig in den Betrieb genommen wird, ohne dass die Freischaltung aufgehoben wurde.

Die Erfindung geht hierbei von der Überlegung aus, dass ein im Zuge der Freischaltungsmaßnahmen abgeschaltetes Anlagengerät in einer Leitwarte der Industrieanlage als abgeschaltet angezeigt wird, sodass dort erkennbar ist, dass das Anlagengerät außer Betrieb ist. Da die Sicherheitsmaßnahmen jedoch in aller Regel manuell durchgeführt werden, beispielsweise ein Schließen eines Absperrventils, ein Umlegen eines elektrischen Schalters oder ein manuelles Verriegeln von beweglichen Teilen, ist der Leittechnik häufig nicht bekannt, aus welchem Grund das Anlagengerät außer Betrieb ist.

Liegt einem Bediener in der Leitwarte kein Durchschlag des Freischaltungsformulars oder äquivalente Information vor, so kann dieser nicht unterscheiden, ob die Abschaltung des Anlagengeräts durch einen Fehler, z.B. eine Überlast oder eine manuell beabsichtigte betriebliche Abschaltung erfolgt ist. Der Bediener wird gegebenenfalls versuchen, das Anlagengerät über entsprechende leittechnische Schritte wieder in Betrieb zu setzen, wodurch eine Gefährdung der die Arbeiten am Anlagengerät ausführenden Person entstehen kann.

Durch die Übermittlung der Freischaltungsinformation an die Leittechnik kann die Abschaltung des Anlagengeräts als gewollt gekennzeichnet werden, sodass keine Versuche zur Wiederinbetriebnahme des Anlagengeräts unternommen werden, so lange die Freischaltung besteht. Außerdem können auch passive Antriebe, wie beispielsweise ein Handabsperrschieber, oder andere Komponenten, deren Zustand von der Leittechnik nicht überwacht wird, in ihrem freigeschalteten Zustand erfasst und angezeigt werden, sodass durch das Abschalten dieser Komponente eventuell bedingte Fehlermeldungen in ihrer Ursache erkannt werden können und manuelle oder halbautomatische Gegenmaßnahmen unterbleiben.

Die Industrieanlage kann eine jede industrielle Anlage mit einer automatisierten Steuerung eines Anlagengeräts sein. Das Freischalten des Anlagengeräts kann eine Freigabeerklärung umfassen, dass am Anlagengerät gearbeitet werden darf. Sie kann mündlich, schriftlich oder elektronisch erfolgen. Die Arbeiten sind in der Regel außerbetriebliche Arbeiten, wie ein Austausch des Anlagengeräts, von Teilen davon, oder Wartungs-, Einstell- oder Reparaturarbeiten.

Das Freischalten erfolgt vorteilhafterweise manuell und kann eine Anzahl von Freischaltungs- bzw. Sicherheitsmaßnahmen beinhalten, die zweckmäßigerweise von einer fachkundigen Person der Industrieanlage durchgeführt werden. Nach dem Freischalten kann an dem Anlagengerät gearbeitet werden.

Das Datenübermittlungsgerät ist vorteilhafterweise ein elektronisches Gerät zum Übermitteln und zweckmäßigerweise zum Zwischenspeichern von Daten, die über den Dateneingang in die Datenübermittelungseinheit Eingang gefunden haben, an die Schnittstelle. Der Dateneingang kann zur Identifizierung des Anlagengeräts vorgesehen sein und ist vorteilhafterweise als Leseeinheit zum selbständigen Einlesen von Daten ausgeführt, z.B. zum Lesen eines Strichcodes oder eines anderen Identifikationsmittels des Anlagengeräts. Der Dateneingang kann aber auch eine Einheit zur manuellen Eingabe sein, beispielsweise eine Tastatur oder eine Bildschirmeingabe.

Die Schnittstelle ist eine Datenschnittstelle und dient zum zumindest monodirektionalen Austausch von Daten zwischen der Datenübermittlungseinheit und der Leittechnik der Industrieanlage und insbesondere zum Aufbauen einer entsprechenden signaltechnischen Verbindung. Die Leittechnik umfasst Geräte und Programme zur Steuerung der Industrieanlage bzw. ihrer Anlagengeräte. Die Erfindung ist besonders vorteilhaft anwendbar auf alle Anlagengeräte, die abgeschaltet werden, insbesondere manuell, und nicht wieder angeschaltet werden sollen, bis die Aufhebung der Freischaltung erfolgt ist.

In einer vorteilhaften Ausführungsform der Erfindung ist die Datenübermittlungseinheit eine mobile Einheit, die von einem Bediener zur Aufnahme der Daten des zu bearbeitenden Anlagengeräts an das Anlagengerät gebracht wird. Auf diese Weise kann die Freischaltungsinformation direkt vor Ort eingegeben und über die Schnittstelle an die Leittechnik übermittelt werden, ohne dass beispielsweise Zettel vom Anlagengerät zu einer Eingabestation gebracht werden müssen.

Vorteilhafterweise ist das Anlagengerät mit einem Datenträger mit Daten versehen, die von der Datenübermittlungseinheit eingelesen werden. Der Datenträger kann ein passiver Datenträger sein, beispielsweise ein passiver Identifikationsträger, wie ein Strichcode oder ein RFID (Radio Frequency Identifikation Device). Die Daten sind zweckmäßigerweise Identifikationsdaten des Anlagengeräts.

Weiter vorteilhaft wird die Freischaltungsinformation drahtlos an die Leittechnik übertragen, wodurch eine schnelle und effiziente Übertragung erreicht werden kann. Die Übertragung kann unmittelbar nach dem Einlesen der Daten erfolgen oder auf eine Bedienereingabe in die Datenübermittelungseinheit hin.

Die Freischaltungsinformation umfasst zweckmäßigerweise Identifikationsdaten zur Identifizierung des Anlagengeräts. Auf diese Weise kann die Leittechnik das Anlagengerät, an dem gearbeitet werden soll, identifizieren und in Bedienerplänen entsprechend markieren. Vorteilhaft ist es auch, wenn sie Informationen zur vorgenommenen Abschaltung enthält, beispielsweise ob eine Einspeisung abgeschaltet wurde, also eine Stromversorgung des Anlagengeräts, ein Medienkanal gesperrt oder bewegliche Teile blockiert wurden. Auf diese Weise können eventuell als Folge auftretende Fehlermeldungen der Leittechnik zügig verstanden und zugeordnet werden.

Zur Darstellung des freigeschalteten Anlagengeräts in beispielsweise einer Leitwarte ist es vorteilhaft, wenn die Leittechnik das freigeschaltete Anlagengerät auf einer Anzeige als solches kennzeichnet. Durch diese Kennzeichnung kann ein Bediener unmissverständlich und eindeutig erkennen, dass das Anlagengerät freigeschaltet und somit gewollt außer Betrieb ist. Das Anzeigen kann unmittelbar nach dem Erhalt der Information von der Datenübermittlungseinheit erfolgen.

Insbesondere ist es für eine mögliche Fehlerrückverfolgung vorteilhaft, wenn die Leittechnik Freischaltungen von Anlagengeräten protokolliert. So kann protokolliert werden, welches Anlagengerät von welcher Datenübermittlungseinheit in welcher Zeit freigeschaltet wurde und beispielsweise wann die Freischaltung wieder aufgehoben wurde.

Die Sicherheit zur Durchführung von Arbeiten an dem Anlagengerät kann weiter erhöht werden, wenn die Leittechnik einen Plausibilitätstest zu dem freigeschalteten Anlagengerät durchführt. Dieser Test kann beinhalten, dass geprüft wird, ob zu dem Anlagengerät außer der Freischaltungsinformation weitere Information vorliegt, die mit der Freischaltung kompatibel ist. In der Regel wird ein Abschalten des Anlagengeräts auch ohne die Freischaltungsinformation von der Leittechnik erkannt und angezeigt. Die Freischaltungsinformation kann nun mit der weiteren Information verglichen werden, wobei beispielsweise festgestellt wird, dass das freigeschaltete Anlagengerät bereits abgeschaltet ist. Der Plausibilitätstest ist somit erfolgreich.

Es kann jedoch sein, dass das Anlagengerät während der durchzuführenden Arbeiten versehentlich eingeschaltet wird und diese Statusänderung als weitere Information in der Leittechnik vorliegt. In einem solchen Fall ist der Plausibilitätstest negativ. Vorteilhafterweise gibt die Leittechnik bei negativem Testergebnis eine Warnung aus, z.B. auf eine Anzeige in der Leitwarte, sodass ein Anfahren des Anlagengeräts beispielsweise verhindert wird, oder an die Datenübermittlungseinheit. Die wartende Person kann erkennen, dass das Anlagengerät beispielsweise eine Statusänderung erfahren hat und kann entsprechend reagieren.

Weiter vorteilhaft ist es, wenn die Leittechnik eine Freischaltungsbestätigung an die Datenübermittlungseinheit sendet. So kann eine freischaltende Person zweifelsfrei erkennen, dass die beispielsweise über Funk übertragene Freischaltungsinformation tatsächlich die Leitstelle erreicht hat.

In einer weiteren vorteilhaften Ausführungsvariante der Erfindung ermittelt die Leittechnik Daten zum freigeschalteten Anlagengerät und sendet diese an die Datenübermittlungseinheit. Auf diese Weise können der freischaltenden Person Zustandsdaten, wie Druck, Temperatur, Durchflussmenge, Drehzahl oder dergleichen übermittelt werden, die sicherheitsrelevant sein können. Beispielsweise kann vermieden werden, dass ein sehr heißes Aggregat unmittelbar nach Freischaltung geöffnet wird. Die Daten zum freigeschalteten Anlagengerät können unaufgefordert nach Erhalt der Freischaltungsinformation oder auf Anforderung der Datenübermittlungseinheit gesendet werden.

Weiter vorteilhaft ist es, wenn das Anlagengerät wieder in Betrieb genommen wird und die Leittechnik Daten zum in Betrieb genommenen Anlagengerät ermittelt und an die Datenübermittlungseinheit sendet, insbesondere auf Anforderung der Datenübermittlungseinheit. Auf diese Weise kann eine Inbetriebnahme besonders effizient erfolgen, da einer die Inbetriebnahme durchführenden Person die Betriebsdaten übermittelt werden können und diese Person prüfen kann, ob die Inbetriebnahme ordnungsgemäß erfolgt, ob beispielsweise ein geplanter Druckaufbau, eine Temperaturerhöhung oder ein Drehzahlverlauf stattfinden.

In einer anderen vorteilhaften Ausführungsform der Erfindung ist vorgesehen, dass die Leittechnik Folgen der Freischaltung innerhalb der Industrieanlage ermittelt und Daten zu Folgen an die Datenübermittlungseinheit sendet. Auf diese Weise kann ein Bediener erkennen, welche Folgen die Freischaltung in der Industrieanlage hat und ob Wartungsarbeiten nicht vielleicht zu einem späteren Zeitpunkt oder zunächst an einem anderen Anlagengerät vorgenommen werden sollten.

Vorteilhafterweise wird über die Datenübermittlungseinheit eine Aufhebung der Freischaltung an die Leittechnik übermittelt. Diese kann die entsprechende Statusänderung des Anlagengeräts quittieren und eine automatische Steuerung des Anlagengeräts wieder aufnehmen, sodass das Anlagengerät wieder in den regulären Betrieb übernommen ist.

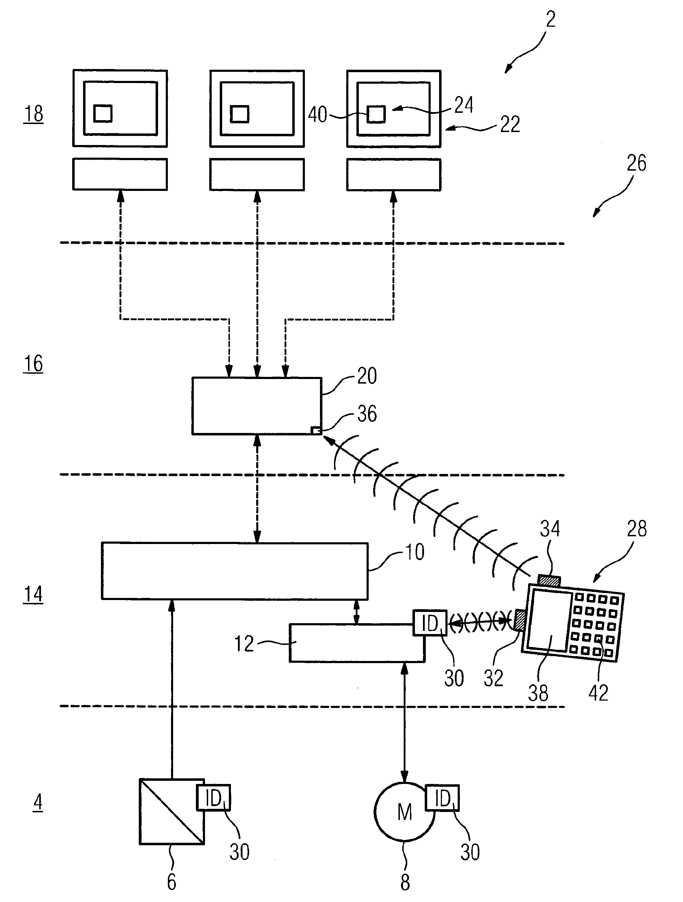

Die Erfindung wird anhand eines Ausführungsbeispiels näher erläutert, das in der Zeichnung dargestellt ist.

Die Zeichnung enthält eine einzige Figur, in der eine Industrieanlage 2 schematisch angedeutet ist. Die Industrieanlage 2 umfasst in einem Feld 4 vor Ort eine Anzahl von Anlagengeräten 6, 8, von denen der Übersichtlichkeit halber nur ein Sensor als Anlagengerät 6 und ein Antrieb als Anlagengerät 8 dargestellt sind. Der Sensor ist direkt mit einem Automatisierungssystem 10 und der Antrieb über eine Schaltanlage 12 mit dem Automatisierungssystem 10 in einem Elektronikraum 14 verbunden. Das Automatisierungssystem liest den Sensor aus und steuert über die Schaltanlage 12 den Antrieb.

In einem Serverraum 16 einer Warte 18 dient ein Server 20 als Schnittstelle zwischen einer Bedienerebene, in diesem Ausführungsbeispiel eine Anzahl von Bedienplätzen 22 in der Warte 18, und einer Steuerebene, in diesem Beispiel dem Automatisierungssystem 10. Über Anzeigen 24 der Bedienplätze 22 können Bediener die Industrieanlage 2 überwachen und steuern. Die Warte 18, der Server 20, das Automatisierungssystem 10 und die Schaltanlage 12 bilden zusammen eine Leittechnik 26, mit der die Industrieanlage 2 und insbesondere deren Feld 4 überwacht und gesteuert wird.

Zur Durchführung von Arbeiten an einem Anlagengerät 6, 8, beispielsweise an dem Antrieb, durch z.B. einen Wartungstechniker, wendet sich der Wartungstechniker an beispielsweise einen Anlagentechniker der Industrieanlage 2 und bittet um Freischaltung des zu wartenden Anlagengeräts 8. Der Anlagentechniker führt daraufhin eine Anzahl von Sicherheitsmaßnahmen am Anlagengerät 8 durch, wie die Abschaltung der Einspeisung des Antriebs und eine mechanische Blockade von beweglichen Teilen, um eine hohe Sicherheit beim Arbeiten am Antrieb zu gewährleisten. Die Sicherheitsmaßnahmen werden auf einem Formular dokumentiert und der Anlagentechniker gibt nach Abschluss der Sicherheitsmaßnahmen einen Durchschlag des Formulars als Freischaltungsbestätigung an den Wartungstechniker. Die Übergabe der Freischaltungsbestätigung und damit die Erlaubnis zur Durchführung der Arbeiten am Anlagengerät 8 ist hierbei der Vorgang der Freischaltung des Anlagengeräts 8.

Zusätzlich zu dieser Freischaltung bedient sich der Anlagentechniker einer Datenübermittlungseinheit 28 in Form eines Mobilteils, das er bei sich führt, und liest einen Identifikationscode sowohl des Anlagengeräts 8 als auch der Schaltanlage 12 ein. Zu diesem Zweck sind an den Anlagengeräten 6, 8 und an der Schaltanlage 12 Datenträger 30 in Form von Strichcodes angebracht, auf denen Daten zur Identifizierung der Anlagengeräte 6, 8 bzw. der Schaltanlage 12 geschrieben sind. Diese Daten werden mit Hilfe eines Dateneingangs 32 der Datenübermittlungseinheit 28 gelesen, der in diesem Ausführungsbeispiel ein Strichcodeleser ist. Die Identifizierungsdaten werden über einen Sender 34 der Datenübermittlungseinheit 28 an eine Schnittstelleneinheit 36 des Servers 20 drahtlos übermittelt, sodass diesem und damit der Leittechnik 26 bekannt ist, dass das Anlagengerät 8 und ein entsprechender Abschnitt in der Schaltanlage 12 freigeschaltet sind. Sender 34 und Schnittstelleneinheit 36 bilden eine Schnittstelle, wobei der Sender 34 auch als Empfänger dienen kann zum Empfang von Daten, die z.B. von der Schnittstelleneinheit 36 gesendet werden.

Das Übermitteln dieser Freischaltungsinformation an die Leittechnik 26 erfolgt zweckmäßigerweise vor Beginn der Durchführung der Sicherheitsmaßnahmen, da unmittelbar nach der Verarbeitung der Freischaltungsinformation durch den Server 20 die Leittechnik 26 eine automatische Ansteuerung des Anlagengeräts 8 sperrt. Hierdurch ist der Anlagentechniker bereits bei Durchführung der Sicherungsmaßnahmen vor einer unerwünschten Ansteuerung des Anlagengeräts 8 geschützt. Der Server 20 quittiert den Erhalt der Freischaltungsinformation und diese Quittung wird auf einer Anzeige 38 der Datenübermittlungseinheit visuell angezeigt, sodass der Anlagentechniker weiß, dass die Übermittlung der Freischaltungsinformation an die Leittechnik 26 erfolgreich war.

Veranlasst durch die Freischaltungsinformation wird an den Bedienplätzen 22 nun ein entsprechender Hinweis 40 zur Verfügung gestellt, dass das Anlagengerät 8 freigeschaltet ist. Außerdem wird die Freischaltung durch die Leittechnik 26 protokolliert, nämlich die Identifizierung des Anlagengeräts 8 sowie eine Identifizierung der Datenübermittlungseinheit 28, die hierzu einen eigenen Identifizierungscode an den Server 20 sendet, sowie den Zeitpunkt der Übermittlung der Freischaltungsinformation.

Als nächsten Schritt führt der Server 20 einen Plausibilitätstest durch und überprüft im Zuge dessen, ob eine Information vorliegt, nach der das Anlagengerät 8 abgeschaltet oder anderweitig außer Betrieb ist. Da die Datenübermittlung vor der Durchführung der Sicherheitsmaßnahmen, also vor dem Abschalten des Antriebs 8 erfolgte, liegt keine solche Information vor und der Plausibilitätstest fällt negativ aus. Infolgedessen wird mit dem Hinweis 40 auf den Anzeigen 24 ausgegeben, dass das Anlagengerät 8 zwar freigeschaltet aber noch in Betrieb ist. Dieser Hinweis wird auch an die Datenübermittlungseinheit 28 übermittelt und auf der Anzeige 38 angezeigt. Nach der erfolgten Abschaltung des Anlagengeräts 8 ist der Plausibilitätstest, der in regelmäßigen Abständen, beispielsweise alle fünf Sekunden, durchgeführt wird, positiv und die entsprechenden Hinweise werden von den Anzeigen 24, 38 entfernt oder geändert.

Über eine Eingabe 42 in Form einer Tastatur ist es dem Anlagentechniker möglich, Daten zum Umfang und zur Art der ausführenden Arbeiten am Anlagengerät 8 einzugeben, die auf einen Sendebefehl des Anlagentechnikers ebenfalls an den Server 20 übermittelt werden. Diese Informationen werden ebenfalls im Hinweis 40 eingeblendet oder können auf Anfrage eines Bedieners in der Leitwarte 18 eingeblendet werden. Es ist dem Bediener nun bekannt, wie lange die Störung voraussichtlich dauern wird und welche Risiken mit ihr verbunden sind.

Zur Information an den Anlagentechniker ermittelt der Server 20 außerdem Zustandsdaten des Anlagengeräts 8, wie Drehzahl des Antriebs, Temperatur und Stromaufnahme bzw. Leistung. Außerdem werden Informationen zu Konsequenzen der Freischaltung oder zu Zusatzmaßnahmen zur Freischaltung übermittelt, beispielsweise dass es ungünstig ist, den Antrieb innerhalb der nächsten 15 Sekunden abzuschalten, da der Antrieb besser geregelt heruntergefahren werden sollte. Die Zusatzmaßnahme ist ein Warten von zumindest 15 Sekunden. Der Anlagentechniker wartet nun mit dem Abschalten des Antriebs 15 Sekunden oder so lange, bis eine entsprechende Freigabe von der Leittechnik 26 bzw. vom Server 20 erfolgt.

Auf die Übermittlung der Freigabeinformation an den Server hin prüft dieser des Weiteren, welche Abschaltmaßnahmen seitens der Leittechnik 26 vorteilhafterweise durchzuführen sind. Eine solche vorteilhafte Abschaltmaßnahme ist z.B. das geregelte Herunterfahren des Antriebs. Die Maßnahme wird der Datenübermittlungseinheit 28 übermittelt und auf der Anzeige 38 angezeigt, inklusive der voraussichtlichen Dauer dieser Maßnahme, im obigen Beispiel 15 Sekunden. Die Durchführung einer solchen Abschaltmaßnahme wird auch an Bedienplätze 22 der Leitwarte 18 übermittelt zur Kenntnisnahme durch einen Bediener.

Nach der durchgeführten Abschaltmaßnahme, den Sicherheitsmaßnahmen und der Freischaltung kann der Wartungstechniker die angestrebten Arbeiten am Anlagengerät 8 ausführen.

Nach deren Beendigung kann ein Test des Anlagengeräts notwendig sein, sodass der Wartungstechniker unter Umständen das immer noch freigeschaltete Anlagengerät mit Arbeitsenergie versorgt, indem die Einspeisung des Anlagengeräts wiederhergestellt wird. Eventuell wird eine mechanische Sperre entfernt und ein Betriebstest durchgeführt. Die teilweise oder vollständige Betriebsbereitschaft wird dem Server durch die Schaltanlage 12 und das Automatisierungssystem 10 mitgeteilt und an den Bedienplätzen angezeigt. Allerdings bleibt eine aktivierende Ansteuerung des Anlagengeräts 8 weiterhin gesperrt, da dieses weiterhin freigeschaltet bleibt. Der Betriebstest kann durchgeführt werden, ohne dass die Leittechnik eine Ansteuerung des Antriebs zur Aufnahme eines regulären Betriebs vornimmt.

Nach Rückgängigmachung der Sicherheitsmaßnahmen wird die Freischaltung durch den Anlagentechniker aufgehoben, indem dieser den Datenträger 30 des Anlagengeräts 8 erneut einliest und eine entsprechende Freischaltungsinformation über die Schnittstelle 36 an die Leittechnik 26 sendet. Die Freischaltung ist aufgehoben und das Anlagengerät 8 für einen regulären Betrieb freigegeben.

Für eine erste Inbetriebnahme oder eine Inbetriebnahme nach einer größeren Reparatur oder Wartung ist es vorteilhaft, dass die Leittechnik 26 dazu ausgeführt ist, der Datenübermittlungseinheit 28 Daten zum in Betrieb genommenen Anlagengerät 8 zu senden, beispielsweise Zustandsdaten wie Temperatur, Stromaufnahme und Drehzahl. Auf diese Weise kann ein Wartungstechniker oder Anlagentechniker feststellen, ob die Inbetriebnahme erfolgreich ist, ohne dass er einen entsprechenden Partner in der Leitwarte 18 zur Übermittlung dieser notwendigen Inbetriebnahmeinformation braucht. Zur Anforderung dieser Inbetriebnahmeinformation sendet die Datenübermittlungseinheit 28 auf eine Anforderung über die Tastatur 42 eine entsprechende Anforderung an den Server 20, der darauf erwidernd die entsprechenden Daten ebenfalls drahtlos an die Datenübermittlungseinheit 28 sendet.

In der beschriebenen Weise kann eine Arbeit an dem Anlagengerät 8 und eine Inbetriebnahme des Anlagengeräts 8 effektiv und sicher durchgeführt werden.

## Patentansprüche

1. Verfahren zum Freischalten eines Anlagengeräts (6, 8) einer Industrieanlage (2), bei dem zumindest eine Sicherheitsmaßnahme am Anlagengerät (6, 8) getroffen wird, so dass ein sicheres Arbeiten am Anlagengerät (6, 8) möglich ist, und das Anlagengerät (6, 8) zur Durchführung der Arbeiten freigeschaltet und nach dem Freischalten an dem Anlagengerät außerbetrieblich gearbeitet wird, wobei
- mit Hilfe einer Datenübermittlungseinheit (28) mit einem Dateneingang (32) zur Aufnahme von Daten des Anlagengeräts (6, 8) und einer Schnittstelle (36) zwischen der Datenübermittlungseinheit (28) und einer Leittechnik (26) der Industrieanlage (2) Freischaltungsinformation an die Leittechnik (26) übermittelt wird,
- die Freischaltungsinformation Daten zur am freigeschalteten Anlagengerät (6, 8) auszuführenden Arbeit umfasst,
**dadurch gekennzeichnet, dass**
- die Leittechnik (26) eine durch die Leittechnik (26) veranlasste aktivierende Ansteuerung des freigeschalteten Anlagengeräts (6, 8) sperrt und auch dann gesperrt ist, wenn das freigeschaltete Anlagengerät (6, 8) mit Arbeitsenergie versorgt und eingeschaltet ist.

2. Verfahren nach Anspruch 1,
**dadurch gekennzeichnet, dass** die Datenübermittlungseinheit (28) eine mobile Einheit ist, die von einem Bediener zur Aufnahme der Daten des zu bearbeitenden Anlagengeräts (6, 8) an das Anlagengerät (6, 8) gebracht wird.

3. Verfahren nach Anspruch 1 oder 2,
**dadurch gekennzeichnet, dass** das Anlagengerät (6, 8) mit einem Datenträger (30) mit Daten versehen ist, die von der Datenübermittlungseinheit (28) eingelesen werden.

4. Verfahren nach einem der vorhergehenden Ansprüche,
**dadurch gekennzeichnet, dass** die Leittechnik (26) ein freigeschaltetes Anlagengerät (6, 8) auf einer Anzeige (24, 38) als solches kennzeichnet.

5. Verfahren nach einem der vorhergehenden Ansprüche,
**dadurch gekennzeichnet, dass** die Leittechnik (26) Freischaltungen von Anlagengeräten (6, 8) protokolliert.

6. Verfahren nach einem der vorhergehenden Ansprüche,
**dadurch gekennzeichnet, dass** die Leittechnik (26) einen Plausibilitätstest zu dem freigeschalteten Anlagengerät (6, 8) durchführt, ob zu dem Anlagengerät (6, 8) außer der Freischaltungsinformation weitere Information vorliegt, die mit einer Freischaltung kompatibel ist.

7. Verfahren nach Anspruch 6,
**dadurch gekennzeichnet, dass** die Leittechnik (26) bei negativem Testergebnis eine Warnung an die Datenübermittlungseinheit (28) ausgibt.

8. Verfahren nach einem der vorhergehenden Ansprüche,
**dadurch gekennzeichnet, dass** die Leittechnik (26) Daten zum freigeschalteten Anlagengerät (6, 8) ermittelt und an die Datenübermittlungseinheit (28) sendet.

9. Verfahren nach Anspruch 8,
**dadurch gekennzeichnet, dass** das Anlagengerät (6, 8) wieder in Betrieb genommen wird und die Leittechnik (26) auf Anforderung der Datenübermittlungseinheit (28) Daten zum in Betrieb genommenen Anlagengerät (6, 8) ermittelt und an die Datenübermittlungseinheit (28) sendet.

10. Verfahren nach einem der vorhergehenden Ansprüche,
**dadurch gekennzeichnet, dass** die Leittechnik (26) Folgen der Freischaltung innerhalb der Industrieanlage (2) ermittelt und Daten zu Folgen an die Datenübermittlungseinheit (28) sendet.

11. Verfahren nach einem der vorhergehenden Ansprüche,
**dadurch gekennzeichnet, dass** über die Datenübermittlungseinheit (28) eine Aufhebung der Freischaltung an die Leittechnik (26) übermittelt wird.

## Claims

1. Method for isolating a plant device (6, 8) of an industrial plant (2), wherein at least one safety measure is implemented on the plant device (6, 8), so it is possible to work safely on the plant device (6, 8), and the plant device (6, 8) is isolated for the work to be carried out and work is carried out externally on the plant device after isolation,
wherein
- isolation information is communicated to the control and protection system (26) using a data communication unit (28) having a data input (32) for receiving data from the plant device (6, 8) and an interface (36) between the data communication unit (28) and a control and protection system (26) of the industrial plant (2),
- the isolation information includes data on the work to be carried out on the isolated plant device (6, 8), **characterised in that**
- the control and protection system (26) blocks activating triggering of the isolated plant device (6, 8) induced by the control and protection system (26) and is also blocked if the isolated plant device (6, 8) is supplied and switched on with working energy.

2. Method according to claim 1, **characterised in that** the data communication unit (28) is a portable unit which is brought to the plant device (6, 8) by an operator to receive data from the plant device (6, 8) that is to be worked on.

3. Method according to claim 1 or 2, **characterised in that** the plant device (6, 8) is provided with a storage medium (30) comprising data, which is read-in by the data communication unit (28).

4. Method according to any one of the preceding claims, **characterised in that** the control and protection system (26) identifies an isolated plant device (6, 8) as such on a display (24, 38).

5. Method according to any one of the preceding claims, **characterised in that** the control and protection system (26) logs isolations of plant devices (6, 8).

6. Method according to any one of the preceding claims, **characterised in that** the control and protection system (26) caries out a plausibility test in relation to the isolated plant device (6, 8) to determine whether further information, other than isolation information, exists for the plant device (6, 8), which information is compatible with an isolation.

7. Method according to claim 6, **characterised in that** the control and protection system (26) emits a warning to the data communication unit (28) in the case of a negative test result.

8. Method according to any one of the preceding claims, **characterised in that** the control and protection system (26) determines data relating to the isolated plant device (6, 8) and sends it to the data communication unit (28).

9. Method according to claim 8, **characterised in that** the plant device (6, 8) is put back into operation and, at the request of the data communication unit (28), the control and protection system (26) determines data relating to the plant device (6, 8) that has been put into operation and sends it to the data communication unit (28).

10. Method according to any one of the preceding claims, **characterised in that** the control and protection system (26) determines consequences of the isolation within the industrial plant (2) and sends data relating to consequences to the data communication unit (28).

11. Method according to any one of the preceding claims, **characterised in that** cancelation of isolation is communicated to the control and protection system (26) by the data communication unit (28).

## Revendications

1. Procédé de déconnexion d'un appareil ( 6, 8 ) d'une installation ( 2 ) industrielle, dans lequel on prend au moins une mesure de sécurité sur l'appareil ( 6, 8 ) de l'installation, de manière à rendre possible un travail sur l'appareil ( 6, 8 ) de l'installation et on déconnecte l'appareil ( 6, 8 ) de l'installation pour effectuer les travaux et, après la déconnexion, on travaille hors fonctionnement sur l'appareil de l'installation dans lequel
- à l'aide d'une unité ( 28 ) de transmission de données ayant une entrée ( 32 ) de données pour recevoir des données de l'appareil ( 6, 8 ) de l'installation et une interface ( 36 ) entre l'unité ( 28 ) de transmission de données et une technique (26) de conduite de l'installation ( 2 ) industrielle, on transmet une information de déconnexion à la technique ( 26 ) de conduite,
- l'information de déconnexion comprend des données sur le travail à effectuer sur l'appareil ( 6, 8 ) de l'installation déconnectée,
**caractérisé en ce que**
- la technique ( 26 ) de conduite bloque une commande activant l'appareil ( 6, 8 ) de l'installation déconnecté et provoquée par la technique ( 26 ) de conduite et est bloquée aussi si l'appareil ( 6, 8 ) de l'installation déconnecté est alimenté en énergie de travail et est mis en circuit.

2. Procédé suivant la revendication 1, **caractérisé en ce que** l'unité ( 28 ) de transmission de données est une unité mobile qui est mise sur l'appareil ( 6, 8 ) de l'installation par un opérateur pour la réception des données de l'appareil ( 6, 8 ) de l'installation à traiter.

3. Procédé suivant la revendication 1 ou 2, **caractérisé en ce que** l'appareil ( 6, 8 ) de l'installation est muni d'un support ( 30 ) de données ayant des données qui sont lues par l'unité ( 28 ) de transmission de données.

4. Procédé suivant l'une des revendications précédentes, **caractérisé en ce que** la technique ( 26 ) de conduite, caractérise en tant que tel sur un affichage ( 24, 38 ) un appareil ( 6, 8 ) d'installation déconnecté.

5. Procédé suivant l'une des revendications précédentes, **caractérisé en ce que** la technique ( 26 ) de conduite dresse un procès-verbal des déconnexions d'appareils ( 6, 8 ) de l'installation.

6. Procédé suivant l'une des revendications précédentes, **caractérisé en ce que** la technique ( 26 ) de conduite effectue un test de vraisemblance sur l'appareil ( 6, 8 ) de l'installation déconnecté, sur le point de savoir s'il y a sur l'appareil ( 6, 8 ) de l'installation, en plus de l'information de déconnexion, une autre information qui est compatible avec une déconnexion.

7. Procédé suivant la revendication 6, **caractérisé en ce que** la technique ( 26 ) de conduite émet, si un résultat de test est négatif, une alerte vers l'unité ( 28 ) de transmission de données.

8. Procédé suivant l'une des revendications précédentes, **caractérisé en ce que** la technique ( 26 ) de conduite détermine des données sur l'appareil ( 6, 8 ) de l'installation déconnecté et les envoie à l'unité ( 28 ) de transmission de données.

9. Procédé suivant la revendication 8, **caractérisé en ce que** l'appareil ( 6, 8 ) de l'installation est remis en service et la technique (26) de conduite détermine, sur demande de l'unité (28) de transmission de données, des données sur l'appareil ( 6, 8 ) de l'installation mis en service et les envoie à l'unité ( 28 ) de transmission de données.

10. Procédé suivant l'une des revendications précédentes, **caractérisé en ce que** la technique ( 26 ) de conduite détermine des suites de la déconnexion au sein de l'installation ( 2 ) industrielle et envoie des données sur les suites à l'unité ( 28 ) de transmission de données.

11. Procédé suivant l'une des revendications précédentes, **caractérisé en ce qu'**une cessation de la déconnexion est envoyée à la technique ( 26 ) de conduite par l'unité ( 28 ) de transmission de données.
